# EUROPÄISCHE PATENTSCHRIFT

(11) **EP 0 890 316 B1**
(45) Veröffentlichungstag und Bekanntmachung des Hinweises auf die Patenterteilung: **11.09.2002**
(21) Anmeldenummer: 98108984.0
(22) Anmeldetag: 18.05.1998
(51) Int. Cl.: A23G 1/00, A23G 1/21, A23G 3/20, A23P 1/08, A23L 1/164, B65D 65/46, A23G 3/00

(54) **Gefüllter Hohlkörper aus Schokolade**
Filled chocolate hollow body
Corps creux en chocolat fourré

(30) Priorität: 10.06.1997 AT 34497
(43) Veröffentlichungstag der Anmeldung: 13.01.1999
(73) Patentinhaber: Salzburger Schokolade- und Süsswarenfabrik Gesellschaft m.b.H. & Co. KG, 5082 Grödig (AT)
(72) Erfinder: Faust, Robert, 5020 Salzburg (AT)
(74) Vertreter: Torggler, Paul Norbert, Dr.

(56) Entgegenhaltungen:
- EP-A- 0 561 513
- EP-A- 0 686 354
- DE-A- 1 958 440
- DE-A- 3 913 824
- DE-U- 9 211 592
- DE-U- 29 610 098
- DE-U- 29 801 124
- FR-A- 2 069 955
- FR-A- 2 472 346
- US-A- 4 820 533
- DATABASE WPI Week 98328. Mai 1997 Derwent Publications Ltd., London, GB; AN 98-021681 XP002091736 & HU 75 366 A (KOPCSO), 28. Mai 1997
- PATENT ABSTRACTS OF JAPAN vol. 017, no. 499 (C-1109), 9. September 1993 & JP 05 137511 A (KANEBO LTD), 1. Juni 1993

## Beschreibung

Gefüllte Hohlkörper aus Schokolade sind in einer Vielzahl von Zusammensetzungen bekannt. Insbesondere ist es auch bekannt (vgl. DE-OS 1958 440) einen einseitig offenen Hohlkörper aus Schokolade herzustellen, diesen zu füllen und anschließend mit einem Deckel zu verschließen. Das so hergestellte Endprodukt hat ausnahmslos den Charakter eines Bonbons, auch wenn die Füllung Früchte, Nüsse oder dergleichen umfaßt.

Seit einiger Zeit ist es üblich geworden, Hohlkörper aus Schokolade primär in Hinblick auf eine dekorative Wirkung herzustellen, wobei insbesondere die Form von Eiern und Hasen beliebt ist. Mit zunehmender Größe solcher meist mit bunter Metallfolie überzogener Figuren würde es zunehmend sinnlos, diese mit einer Pralinenfüllung zu versehen. Ab einer Größe von etwa 100 cm³ bleiben die marktüblichen Schokoladefiguren somit üblicherweise leer, und wenn sie ihren dekorativen Zweck erfüllt haben, werden sie nicht selten einfach weggeworfen.

Die Neuerung geht von der Überlegung aus, daß bei genügender Größe eines Hohlkörpers das Volumen der Schokolademasse gegenüber dem Volumen des umschlossenen Hohlraumes zunehmend an Bedeutung verliert. Insbesondere hat es sich als möglich erwiesen, die Masse des Hohlkörpers so gering zu halten, daß er zusammen mit der Füllung nicht den Charakter einer Praline hat, sondern eine Zusammensetzung aufweist, welche den Zutaten für ein Schokomüsli entspricht. Erfindungsgemäß ist ein gefüllter Hohlkörper aus Schokolade somit dadurch gekennzeichnet, daß das Volumen des Hohlkörpers mindestens 150 cm³ und die Füllung eine lose, Trockenfrüchte und Cerealien enthaltende Trockenmischung ist.

Der erfindungsgemäße Hohlkörper wird entweder in warmer Flüssigkeit aufgelöst, sodaß eine tellerfertige warme Mahlzeit zubereitet wird, oder in kalter Flüssigkeit aufgeschlagen, wobei die Schokoladenschale durch vorgegebene Sollbruchstellen in mundgerechte Stücke zerbricht. Hierdurch ergibt sich eine leichte Zubereitungsart, die auch von Kindern ohne Aufsicht ausgeführt werden kann. Durch die exakte Proportionierung steht die aufzunehmende Kalorienmenge fest, sodaß diese Frühstücksart bequem bei Reduktionskost etc. angewendet werden kann. Durch die leichte Handhabung ist das Produkt ideal für Frühstücksbuffets im Gastgewerbe. Durch den Volleinschluß der Cerealienmischung in die Schokoladen-, Fettglasur-Schale ist eine Geschmacksbeeinflussung von außen deutlich eingeschränkt. Durch die Art der Verpackung (Single oder Mehrfachbehälter), läßt sich ein exakt vorherbestimmter Vorrat anlegen. Durch die Beigabe von kleinen Geschenkartikeln etc. wird vor allem bei Kindern ein Anreiz zu einer gesunden Ernährung geboten. Bei der Herstellung des erfindungsgemäßen Artikels kann beispielsweise wie folgt vorgegangen werden:

Die Hohlkörperherstellung erfolgt nach dem klassischen Schleuderverfahren oder nach dem Schleudergußverfahren mittels Klappformen oder zusammengesetzten Formenhälften. Die obere Formenhälfte hat eine spundartige Vertiefung, bei der die Schokoladenwandung dünner ist und bei einem späteren Verfahrensabschnitt leicht und exakt durchstoßen werden kann, um den Hohlkörper zu befüllen. Nach dem Abkühlen der Schokolade oder Fettglasurmasse läßt sich der Hohlkörper infolge der Kontraktion der Kakaobutter oder des Fettes leicht ausformen, dies geschieht aber im ersten Schritt nur durch die Abnahme der oberen Formhälfte. Der halbausgeformte Hohlkörper verbleibt in der Form. Die Form wird zu einer Station transportiert, bei der durch thermischen Einfluß oder durch Durchstoßen an der "Spundstelle" ein Loch von ca. 1 cm Durchmesser durch die Schokoladenschale gemacht wird. Die "geöffneten" Hohlkörper werden unter eine Dosiereinrichtung transportiert und positioniert. Es erfolgt die Befüllung mit Cerealien etc. Diese Befüllung kann Sorte für Sorte oder bereits als vorbereitete Mischung erfolgen. Die Dosierung erfolgt entweder volumetrisch oder durch Wiegen der Einzelkomponenten bzw. der Mischung. Um das Entstehen eines Schüttkegels beim Befüllen zu vermeiden, wird die Form während des Befüllens gerüttelt. In einem separaten Schritt werden Verschlußstopfen aus Schokolade oder Fettglasur geformt. Diese haben die Form von Münzen, Siegeln oder dergleichen. Die gefüllten Hohlkörper durchfahren nun eine Station, in der vorher gefertigte Verschlußstopfen punktgenau auf das Loch in der Schokoladenschale aufgesetzt wird. Vorher wird der Lochrand der Hohlfigur oder der Rand des Verschlußstopfens punktgenau angewärmt, sodaß die Schokolade oder Fettglasur leicht angeschmolzen ist und somit eine dichte Verbindung mit dem Hohlkörper eingeht. Die wieder zusammengesetzten. Hohlkörper durchfahren eine Kühlungsstation, um die Nahtstelle sicher zu verbinden.

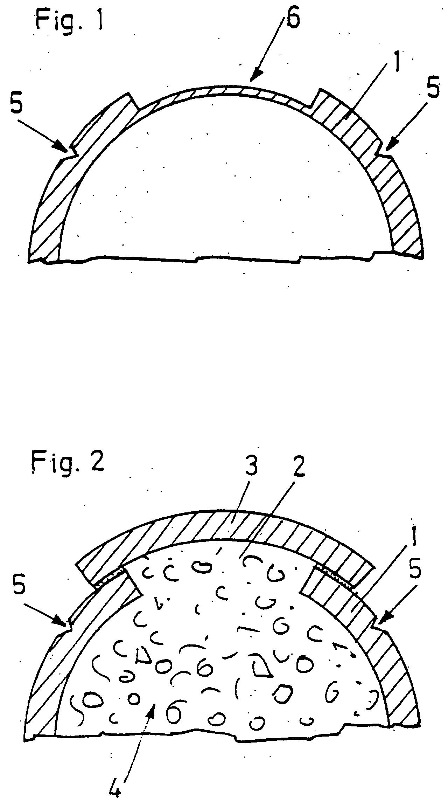

In der Zeichnung ist Fig. 1 eine geschnittene Teildarstellung des zunächst hergestellten Hohlkörpers. Fig. 2 entspricht Fig. 1 für den Zustand nach der Fertigstellung des Produktes.

Der zunächst hergestellte Hohlkörper 1, beispielsweise in Form eines Eies, weist im Bereich 6 der späteren Füllöffnung 2 eine verminderte Wandstärke auf. In Längs- und Querrichtung verlaufende Kerben 5 bilden Sollbruchstellen, entlang derer der Hohlkörper leicht in etwa gleich große Bruchstücke zerteilt werden kann.

Der Hohlkörper nach Fig. 1 wird zunächst durch Eindrücken des geschwächten Bereiches 6 mit einer Öffnung 2 versehen und mit der Trockenmischung 4 befüllt. Anschließend wird der gefüllte Hohlkörper 1 mit dem Deckel 3 verschlossen. Das typische Füllvolumen des dargestellten Hohlkörpers liegt zwischen 160 und 220

cm³. Die Schokolademasse ist geringer als jene der Trockenmischung, wobei vorzugsweise die Masse der Schokolade weniger als 40 g und die Masse der Trockenmischung mehr als 50 g oder sogar mehr als 60 g beträgt.

## Patentansprüche

1. Gefüllter Hohlkörper aus Schokolade, **dadurch gekennzeichnet, daß** das Volumen des Hohlkörpers (1) mindestens 150 cm³ beträgt und die Füllung (5) eine lose, Trockenfrüchte und Cerealien enthaltende Trockenmischung (4) im Ausmaß einer für ein Frühstück oder eine Zwischenmahlzeit passenden Portion ist.

2. Hohlkörper nach Anspruch 1, **dadurch gekennzeichnet, daß** das Volumen des Hohlkörpers (1) zwischen 160 und 220 cm³ liegt.

3. Hohlkörper nach Anspruch 1 oder 2, **dadurch gekennzeichnet, daß** die Masse der Trockenmischung (4) größer als die Masse des Hohlkörpers (1) ist.

4. Hohlkörper nach einem der Ansprüche 1 bis 3, **dadurch gekennzeichnet, daß** der Hohlkörper (1) durch ein Gitter bildende Sollbruchstellen (5) in definierte, vorzugsweise annähernd gleich große Bereiche unterteilt ist.

5. Verfahren zur Herstellung eines Hohlkörpers nach Ansprüche 1 bis 4, **dadurch gekennzeichnet, daß** der Hohlkörper (1) eine Füllöffnung (2) aufweist, durch die der Hohlkörper (1) mit der Trockenmischung (4) befüllt wird, wobei die Füllöffnung (2) anschließend mit einem Deckel (3) aus Schokolade verschlossen wird.

6. Verfahren nach Anspruch 5, **dadurch gekennzeichnet, daß** zunächst ein geschlossener Hohlkörper (1) aus Schokolade hergestellt und aus diesem die Füllöffnung (2) ausgeschnitten wird, in die nach der Füllung des Hohlkörpers (1) der Deckel (3) dichtend eingesetzt wird.

## Claims

1. A filled hollow body of chocolate, **characterised in that** the volume of the hollow body (1) is at least 150 cm³ and the filling (5) is a loose dry mix (4) containing dry fruits and cereals of the size of a portion suitable for a breakfast or a snack between meals.

2. A hollow body according to claim 1 **characterised in that** the volume of the hollow body (1) is between 160 and 220 cm³.

3. A hollow body according to claim 1 or claim 2 **characterised in that** the mass of the dry mix (4) is greater than the mass of the hollow body (1).

4. A hollow body according to one of claims 1 to 3 **characterised in that** the hollow body (1) is divided by desired-rupture locations (5) forming a grid into defined, preferably approximately equally sized regions.

5. A process for producing a hollow body according to claims 1 to 4 **characterised in that** the hollow body (1) has a filling opening (2) through which the hollow body (1) is filled with the dry mix (4), the filling opening (2) then being closed by a cover (3) of chocolate.

6. A process according to claim 5 **characterised in that** firstly a closed hollow body (1) is made from chocolate and the filling opening (2) is cut out of the hollow body, the cover (3) being sealingly fitted into the filling opening after filling of the hollow body (1).

## Revendications

1. Corps creux en chocolat, garni, **caractérisé par le fait que** le volume du corps creux (1) vaut au moins 150 cm³ et que la garniture (5) est un mélange sec (4), contenant des fruits secs et des céréales en vrac, dans la quantité d'une portion convenant pour un petit-déjeuner ou une collation.

2. Corps creux selon la revendication 1, **caractérisé par le fait que** le volume du corps creux (1) vaut entre 160 et 220 cm³.

3. Corps creux selon la revendication 1 ou 2, **caractérisé par le fait que** la masse du mélange sec (4) est supérieure à la masse du corps creux (1).

4. Corps creux selon l'une des revendications 1 à 3, **caractérisé par le fait que** le corps creux (1) est divisé, par des positions de rupture préférentielle (5) formant une grille, en zones définies, de dimensions de préférence approximativement égales.

5. Procédé de fabrication d'un corps creux selon les revendications 1 à 4, **caractérisé par le fait que** le corps creux (1) présente une ouverture de remplissage (2) par laquelle on remplit le corps creux (1) avec le mélange sec (4), l'ouverture de remplissage (2) étant ensuite obturée par un couvercle (3) en chocolat.

6. Procédé selon la revendication 5, **caractérisé par le fait que** l'on fabrique tout d'abord un corps creux fermé (1), en chocolat, et que l'on y découpe l'ouverture de remplissage (2) dans laquelle, après le remplissage du corps creux (1), on insère de façon étanche le couvercle (3).
